# EUROPEAN PATENT APPLICATION

(11) **EP 3 771 705 A1**
(43) Date of publication of application: **03.02.2021**
(21) Application number: 18914583.2
(22) Date of filing: 14.08.2018
(51) Int. Cl.: C05G 3/00, C05G 3/04, C05G 3/08, C05D 5/00, C05D 9/00, C05F 11/00

(54) **NITRO FERTILIZER ANTI-CAKING AGENT AS WELL AS PREPARATION METHOD AND APPLICATION THEREOF**

(30) Priority: 10.04.2018 CN 201810316686
(71) Applicant: Hubei Forbon Technology Co., Ltd., Yingcheng, Hubei 432400 (CN)
(72) Inventor: WANG, Renzong, Yingcheng, Hubei 432400 (CN); YANG, Huiping, Yingcheng, Hubei 432400 (CN); TIAN, Nan, Yingcheng, Hubei 432400 (CN); LI, Shuhua, Yingcheng, Hubei 432400 (CN)
(74) Representative: Hellmich, Wolfgang
(86) International application number: PCT/CN2018/100358
(87) International publication number: WO 2019/196290

(57) **Abstract**

The present invention discloses a nitro fertilizer anti-caking agent and its preparation method and application. The nitro fertilizer anti-caking agent, calculated by mass percentage, includes 20%-30% of magnesium oxide, 5%-10% of nanometer silica powder, and 60%-75% of plant natural straw, wherein a sum of the magnesium oxide, the nanometer silica powder and the plant natural straw is 100%. The nitro fertilizer anti-caking agent is obtained through secondary modification. While being used, the nitro fertilizer anti-caking agent is evenly coated on the surface of nitro fertilizer particles with a screw conveyor. The nitro fertilizer anti-caking agent can form a layer of film on the surface of nitro fertilizer particles, so that the nitro fertilizer remains loose for a long time and has good fluidity, thereby ensuring the quality of the nitro fertilizer.

## Description

### Field of Invention

The present invention relates to the field of nitro fertilizer anti-caking treatment technology, and more particularly to a nitro fertilizer anti-caking agent and its preparation method and application.

### Description of Related Arts

### (1) Overview of anti-caking agents

Anti-caking agents are additives for maintaining good flowability of fertilizers during storage and handling operations. In order to prevent agglomeration of fertilizers, especially the agglomeration of nitro fertilizer is more serious, fertilizer manufacturers mainly coat anti-caking agents on nitro fertilizers while improving process conditions and controlling fertilizer particle characteristics. The use of anti-caking agents can minimize the phenomena of nitro fertilizer agglomeration, moisture absorption and pulverization, increase the fluidity of fertilizer particles, and facilitate the storage, transportation and use of nitro fertilizers. Therefore, as a low-cost, high-yield anti-caking measure, anti-caking agents have now been widely accepted and used by compound fertilizer manufacturers worldwide.

### (2) Current status of anti-caking agents

At present, there are many types of compound fertilizer anti-caking agents on the Chinese market, which are mainly oily and powdery depending on the base material.

Oily anti-caking agents are mostly coated on the surface of the nitro fertilizer for forming a layer of hydrophobic protective film, so as to reduce the interaction between fertilizer particles. Traditional oily anti-caking agents are usually petroleum products such as mineral oils and alkylamines. Mineral oil is the most widely used anti-caking agent due to stable performance and good hydrophobicity, but it is high in cost and is not easy to be degraded. Due to the corrosion of alkylamine on the surface of the nitro fertilizer, the amount of alkylamine cannot be too large, and the cost is also relatively high.

The powdery anti-caking agent is an ultra-fine powder obtained by modifying and grinding non-metallic ores such as diatomite and kaolin, and talcum powder and other inert powders, which adheres to the surface of nitro fertilizer particles and plays a role of mechanical isolation to prevent the nitro fertilizer from agglomeration. The main carrier of the powdery anti-caking agent is non-metallic ore which is insoluble in water and unable to be degraded, causing a relatively large impact on the environment. At the same time, the inert powder has a poor effect due to poor adhesion.

### (3) Application of anti-caking agents

At present, nitro fertilizer manufacturers generally use the two-step method of oil and powder to wrap nitro fertilizer particles, so that the effect of preventing agglomeration is satisfied, and however, the big problem is that the mineral oil powders are unable to adhere well to the surface of nitro fertilizer particles, or are unable to wrap nitro fertilizer particles, or are easy to fall off after wrapping nitro fertilizer particles. These are also the phenomena that people often see the powders falling off and peeling on the surface of nitro fertilizers. In this case, the anti-caking and isolation effect of powders on nitro fertilizers is greatly reduced, and the overall anti-caking effect is unable to be guaranteed. Therefore, petroleum products such as mineral oils and alkylamines are no longer able to meet current environmental protection requirements.

### SUMMARY OF THE PRESENT INVENTION

An object of the present invention is to overcome shortcomings of the prior art and meet the market need for anti-caking nitro fertilizers, so that a nitro fertilizer anti-caking agent and its preparation method and application are provided. The nitro fertilizer anti-caking agent provided by the present invention is prepared by using a natural plant straw as a carrier, and performs wrapping on natural plant straw powder with magnesium oxide powder for firstly modifying, so that the surface of the natural plant straw powder is coated with the magnesium oxide powder. The present invention utilizes nanometer silica powder to perform a second modification on the natural plant straw powder modified by the magnesium oxide powder, so that the natural plant straw powder is changed from hydrophilic to hydrophobic, thereby enhancing the powder anti-caking function. The present invention utilizes sugar and fiber in the natural plant straw to effectively adhere to the surface of the nitro fertilizer, so that the adhesion effect of the surface of the nitro fertilizer is achieved when the powder wraps the nitro fertilizer, avoid the powder falling on the surface of the nitro fertilizer.

To solve the above technical problem, the present invention provides technical solutions as follows.

A nitro fertilizer anti-caking agent, calculated by mass percentage, comprises 20%-30% of magnesium oxide, 5%-10% of nanometer silica powder, and 60%-75% of plant natural straw, wherein a sum of the magnesium oxide, the nanometer silica powder and the plant natural straw is 100%.

Preferably, the plant natural straw is at least one member selected from the group consisting of wheat straw, rice straw, corn straw, rape straw, cotton straw and sugarcane straw.

Preferably, in the plant natural straw, a moisture content is not higher than 2.0%, a primary particle size of D90 is in a range of 20 to 50 µm.

Preferably, in the nanometer silica powder, a silica content is not lower than 95.0%, a primary particle size of D90 is in a range of 80 to 150 nm.

Preferably, in the magnesium oxide, a magnesium oxide content is not lower than 96%, a moisture content is not higher than 1.0%, a primary particle size of D90 is in a range of 10 to 30 µm.

A preparation method of the nitro fertilizer anti-caking agent comprises steps of:
(1) firstly modifying, which comprises: performing a first surface wrapping on the plant natural straw in a stock bin with the magnesium oxide powder through a modifying machine according to the mass percentage, and obtaining a modified plant natural straw powder;
(2) secondly modifying, which comprises: performing a second surface wrapping on the modified plant natural straw powder obtained by the step (1) with the nanometer silica powder according to the mass percentage in the modifying machine, and obtaining a modified powder; and
(3) activating and stabilizing the modified powder, which comprises: cooling the modified powder obtained by secondly modifying to room temperature, standing for 8-10 hours in a sealed condition, and finally obtaining the nitro fertilizer anti-caking agent.

Preferably, the nitro fertilizer anti-caking agent is evenly wrapped on a surface of nitro fertilizer according to a dosage of 2.0 kg to 3.5 kg of the nitro fertilizer anti-caking agent per ton of the nitro fertilizer.

Preferably, the nitro fertilizer anti-caking agent is wrapped on the surface of the nitro fertilizer in a manner that the nitro fertilizer anti-caking agent is directly evenly coated on the surface of nitro fertilizer particles.

Preferably, the nitro fertilizer anti-caking agent is evenly coated on the surface of the nitro fertilizer particles with a screw conveyor.

The nitro fertilizer anti-caking agent, prepared by taking the natural plant straw as a raw material, can improve the farmland ecological environment to varying degrees, and has the effect of improving soil and improving the farmland ecological environment. For example, it can maintain and regulate the temperature and humidity in the field. Moreover, the straw contains a large amount of organic matters, nitrogen phosphorus potassium and trace elements, which is an important organic fertilizer source for agricultural production, thereby improving the nitro fertilizer efficiency.

For the nitro fertilizer anti-caking agent provided by the present invention, the magnesium oxide powder is used for first modification, Mg2+ easily interacts with NH4+ and PO43- in the nitro fertilizer to form Mg(NH4)PO4 on the surface of the nitro fertilizer, Mg(NH4)PO4 is a slow release fertilizer, which means that a layer of slow release fertilizer is coated on the nitro fertilizer. Accordingly, an isolation layer is constantly formed on the surface of the nitro fertilizer; at the same time, the surface of nitro fertilizer particles is effectively isolated from the air, which reduces the rate of water absorption of nitro fertilizer particles, decreases the adhesion between nitro fertilizer particles, inhibits the salt dissolution - recrystallization between nitro fertilizer particles, thereby inhibiting the nitro fertilizer from agglomerating.

For the nitro fertilizer anti-caking agent provided by the present invention, the nanometer silica powder is utilized to perform the second modification on the plant natural straw coated with magnesium oxide. Because the nitro fertilizer is slightly acidic, the nanometer silica powder can effectively balance the pH value of the nitro fertilizer.

Therefore, the nitro fertilizer anti-caking agent provided by the present invention solves the agglomeration of the nitro fertilizer, and at the same time, adds trace elements of Mg to the nitro fertilizer for enriching the nutrition of the nitro fertilizer, and also improves the farmland ecological environment.

### DETAILED DESCRIPTION OF THE PREFERRED EMBODIMENT

The present invention is further described in detail with reference to the embodiments as follows. The raw materials used in the present invention are all directly purchased, in which nanometer silica powder is purchased from Nanjing Tianxing Chemical Material Co., Ltd. China, and the plant natural straw is purchased from Shandong Agricultural Materials Company, China.

### First Embodiment:

A nitro fertilizer anti-caking agent, calculated by mass percentage, comprises 20% of magnesium oxide, 5% of nanometer silica powder, and 75% of corn straw, wherein: in the magnesium oxide, the magnesium oxide content is 96%, the moisture content is 1.0% and the primary particle size of D90 is 10 µm; in the nanometer silica powder, the silica content is 98%, the primary particle size of D90 is 80 nm; in the corn straw, the moisture content is 2.0% and the primary particle size of D90 is 20 µm.

A preparation method of the nitro fertilizer anti-caking agent comprises steps of: performing a first surface wrapping on the corn straw in a stock bin with the magnesium oxide through a modifying machine according to the mass percentage for firstly modifying, obtaining a modified corn straw powder; performing a second surface wrapping on the modified corn straw powder with the nanometer silica powder according to the mass percentage in the modifying machine for secondly modifying, obtaining a modified powder; and cooling the modified powder obtained by secondly modifying to room temperature, standing for 8 hours in a sealed condition, and finally obtaining the nitro fertilizer anti-caking agent.

The obtained nitro fertilizer anti-caking agent is uniformly wrapped on the surface of the nitro fertilizer with a screw conveyor according to the dosage of 3.5 kg of fertilizer anti-caking agent per ton of nitro fertilizer, which has the significant anti-caking effect on the nitro fertilizer.

| | Hygroscopic Rate (%) | Crushing Pressure (N) | Loose Degree (%) |
|---|---|---|---|
| Fertilizer after being wrapped | 24.84 | 29 | 98.21 |
| Fertilizer before being wrapped | 67.11 | 174 | 32.22 |

### Second Embodiment:

A nitro fertilizer anti-caking agent, calculated by mass percentage, comprises 25% of magnesium oxide, 7% of nanometer silica powder, and 68% of rape straw, wherein: in the magnesium oxide, the magnesium oxide content is 97%, the moisture content is 0.98% and the primary particle size of D90 is 20 µm; in the nanometer silica powder, the silica content is 96%, the primary particle size of D90 is 100 nm; in the rape straw, the moisture content is 1.8% and the primary particle size of D90 is 30 µm.

A preparation method of the nitro fertilizer anti-caking agent comprises steps of: performing a first surface wrapping on the rape straw in a stock bin with the magnesium oxide through a modifying machine according to the mass percentage for firstly modifying, obtaining a modified rape straw powder; performing a second surface wrapping on the modified rape straw powder with the nanometer silica powder according to the mass percentage in the modifying machine for secondly modifying, obtaining a modified powder; and cooling the modified powder obtained by secondly modifying to room temperature, standing for 9 hours in a sealed condition, and finally obtaining the nitro fertilizer anti-caking agent.

The obtained nitro fertilizer anti-caking agent is uniformly wrapped on the surface of the nitro fertilizer with a screw conveyor according to the dosage of 3.0 kg of fertilizer anti-caking agent per ton of nitro fertilizer, which has the significant anti-caking effect on the nitro fertilizer.

| | Hygroscopic Rate (%) | Crushing Pressure (N) | Loose Degree (%) |
|---|---|---|---|
| Fertilizer after being wrapped | 24.77 | 36 | 98.07 |
| Fertilizer before being wrapped | 67.19 | 168 | 31.72 |

### Third Embodiment:

A nitro fertilizer anti-caking agent, calculated by mass percentage, comprises 30% of magnesium oxide, 10% of nanometer silica powder, and 60% of cotton straw, wherein: in the magnesium oxide, the magnesium oxide content is 98%, the moisture content is 0.96% and the primary particle size of D90 is 30 µm; in the nanometer silica powder, the silica content is 96.5%, the primary particle size of D90 is 150 nm; in the cotton straw, the moisture content is 1.72% and the primary particle size of D90 is 50 µm.

A preparation method of the nitro fertilizer anti-caking agent comprises steps of: performing a first surface wrapping on the cotton straw in a stock bin with the magnesium oxide through a modifying machine according to the mass percentage for firstly modifying, obtaining a modified cotton straw powder; performing a second surface wrapping on the modified cotton straw powder with the nanometer silica powder according to the mass percentage in the modifying machine for secondly modifying, obtaining a modified powder; and cooling the modified powder obtained by secondly modifying to room temperature, standing for 10 hours in a sealed condition, and finally obtaining the nitro fertilizer anti-caking agent.

The obtained nitro fertilizer anti-caking agent is uniformly wrapped on the surface of the nitro fertilizer with a screw conveyor according to the dosage of 2.5 kg of fertilizer anti-caking agent per ton of nitro fertilizer, which has the significant anti-caking effect on the nitro fertilizer.

| | Hygroscopic Rate (%) | Crushing Pressure (N) | Loose Degree (%) |
|---|---|---|---|
| Fertilizer after being wrapped | 26.10 | 33 | 98.00 |
| Fertilizer before being wrapped | 66.56 | 161 | 32.71 |

### Fourth Embodiment:

A nitro fertilizer anti-caking agent, calculated by mass percentage, comprises 24% of magnesium oxide, 6% of nanometer silica powder, and 70% of a mixture of cotton straw and sugarcane straw, wherein: in the magnesium oxide, the magnesium oxide content is 97.2%, the moisture content is 0.95% and the primary particle size of D90 is 25 µm; in the nanometer silica powder, the silica content is 96.8%, the primary particle size of D90 is 120 nm; in the mixture of the cotton straw and the sugarcane straw, the moisture content is 1.78% and the primary particle size of D90 is 40µm.

A preparation method of the nitro fertilizer anti-caking agent comprises steps of: performing a first surface wrapping on the cotton straw and sugarcane straw in a stock bin with the magnesium oxide through a modifying machine according to the mass percentage for firstly modifying, obtaining a modified cotton straw and sugarcane straw powder; performing a second surface wrapping on the modified cotton straw and sugarcane straw powder with the nanometer silica powder according to the mass percentage in the modifying machine for secondly modifying, obtaining a modified powder; and cooling the modified powder obtained by secondly modifying to room temperature, standing for 8 hours in a sealed condition, and finally obtaining the nitro fertilizer anti-caking agent.

The obtained nitro fertilizer anti-caking agent is uniformly wrapped on the surface of the nitro fertilizer with a screw conveyor according to the dosage of 2.8 kg of fertilizer anti-caking agent per ton of nitro fertilizer, which has the significant anti-caking effect on the nitro fertilizer.

| | Hygroscopic Rate (%) | Crushing Pressure (N) | Loose Degree (%) |
|---|---|---|---|
| Fertilizer after being wrapped | 24.47 | 27 | 97.91 |
| Fertilizer before being wrapped | 68.71 | 169 | 32.33 |

### Fifth Embodiment:

A nitro fertilizer anti-caking agent, calculated by mass percentage, comprises 27% of magnesium oxide, 8% of nanometer silica powder, and 65% of a mixture of rice straw, rape straw and corn straw, wherein: in the magnesium oxide, the magnesium oxide content is 96.2%, the moisture content is 0.93% and the primary particle size of D90 is 28 µm; in the nanometer silica powder, the silica content is 95.8%, the primary particle size of D90 is 115 nm; in the mixture of the rice straw, the rape straw and the corn straw, the moisture content is 1.88% and the primary particle size of D90 is 44 µm.

A preparation method of the nitro fertilizer anti-caking agent comprises steps of: performing a first surface wrapping on the rice straw, rape straw and corn straw in a stock bin with the magnesium oxide through a modifying machine according to the mass percentage for firstly modifying, obtaining a modified rice straw, rape straw and corn straw powder; performing a second surface wrapping on the modified rice straw, rape straw and corn straw powder with the nanometer silica powder according to the mass percentage in the modifying machine for secondly modifying, obtaining a modified powder; and cooling the modified powder obtained by secondly modifying to room temperature, standing for 8 hours in a sealed condition, and finally obtaining the nitro fertilizer anti-caking agent.

The obtained nitro fertilizer anti-caking agent is uniformly wrapped on the surface of the nitro fertilizer with a screw conveyor according to the dosage of 2.0 kg of fertilizer anti-caking agent per ton of nitro fertilizer, which has the significant anti-caking effect on the nitro fertilizer.

| | Hygroscopic Rate (%) | Crushing Pressure (N) | Loose Degree (%) |
|---|---|---|---|
| Fertilizer after being wrapped | 25.27 | 37 | 97.87 |
| Fertilizer before being wrapped | 67.82 | 167 | 32.42 |

## Claims

1. A nitro fertilizer anti-caking agent, calculated by mass percentage, which comprises 20%-30% of magnesium oxide, 5%-10% of nanometer silica powder, and 60%-75% of plant natural straw, wherein a sum of the magnesium oxide, the nanometer silica powder and the plant natural straw is 100%.

2. The nitro fertilizer anti-caking agent, as recited in claim 1, wherein the plant natural straw is at least one member selected from the group consisting of wheat straw, rice straw, corn straw, rape straw, cotton straw and sugarcane straw.

3. The nitro fertilizer anti-caking agent, as recited in claim 1 or 2, wherein in the plant natural straw, a moisture content is not higher than 2.0%, a primary particle size of D90 is in a range of 20 to 50 µm.

4. The nitro fertilizer anti-caking agent, as recited in claim 1, wherein in the nanometer silica powder, a silica content is not lower than 95.0%, a primary particle size of D90 is in a range of 80 to 150 nm.

5. The nitro fertilizer anti-caking agent, as recited in claim 1, wherein in the magnesium oxide, a magnesium oxide content is not lower than 96%, a moisture content is not higher than 1.0%, a primary particle size of D90 is in a range of 10 to 30 µm.

6. A preparation method of the nitro fertilizer anti-caking agent as recited in any one of claims 1 to 5, which comprises steps of:
(1) firstly modifying, which comprises: performing a first surface wrapping on the plant natural straw in a stock bin with the magnesium oxide powder through a modifying machine according to the mass percentage, and obtaining a modified plant natural straw powder;
(2) secondly modifying, which comprises: performing a second surface wrapping on the modified plant natural straw powder obtained by the step (1) with the nanometer silica powder according to the mass percentage in the modifying machine, and obtaining a modified powder; and
(3) activating and stabilizing the modified powder, which comprises: cooling the modified powder obtained by secondly modifying to room temperature, standing for 8-10 hours in a sealed condition, and finally obtaining the nitro fertilizer anti-caking agent.

7. An application of the nitro fertilizer anti-caking agent as recited in any one of claims 1 to 5, comprising the nitro fertilizer anti-caking agent is evenly wrapped on a surface of nitro fertilizer according to a dosage of 2.0 kg to 3.5 kg of the nitro fertilizer anti-caking agent per ton of the nitro fertilizer.

8. The application of the nitro fertilizer anti-caking agent, as recited in claim 7, wherein the nitro fertilizer anti-caking agent is wrapped on the surface of the nitro fertilizer in a manner that the nitro fertilizer anti-caking agent is directly evenly coated on the surface of nitro fertilizer particles.

9. The application of the nitro fertilizer anti-caking agent, as recited in claim 8, wherein the nitro fertilizer anti-caking agent is evenly coated on the surface of the nitro fertilizer particles with a screw conveyor.
